**Europäisches Patentamt**

**European Patent Office**

**Office européen des brevets**

(19)

(11) Veröffentlichungsnummer: **0 057 012**

**A2**

(12) # EUROPÄISCHE PATENTANMELDUNG

(21) Anmeldenummer: **82100519.6**

(22) Anmeldetag: **26.01.82**

(51) Int. Cl.³: **C 25 C 3/12**
    **C 25 C 7/02**

(30) Priorität: **28.01.81 DE 3102776**

(43) Veröffentlichungstag der Anmeldung:
    **04.08.82 Patentblatt 82/31**

(84) Benannte Vertragsstaaten:
    **CH DE FR GB IT LI**

(71) Anmelder: **C. CONRADTY NÜRNBERG GmbH & Co KG**
    **Grünthal 1-6**
    **D-8505 Röthenbach a.d. Pegnitz(DE)**

(72) Erfinder: **Zöllner, Dieter H., Dr.**
    **Händelstrasse 19**
    **D-8501 Schweig b. Nürnberg(DE)**

(72) Erfinder: **Rittmann, Friedrich**
    **Am Buck 18**
    **D-8501 Rückersdorf b. Nürnberg(DE)**

(72) Erfinder: **Lauterbach-Dammler, Inge, Dr.**
    **Peter-Vischer-Strasse 15**
    **D-8500 Nürnberg(DE)**

(72) Erfinder: **Koziol, Konrad, Dipl.-Chem.**
    **Kirchhoffstrasse 18**
    **D-8505 Röthenbach a.d. Pegnitz(DE)**

(72) Erfinder: **Zöllner, Christine, Dr.Dipl.-Chem.**
    **Händelstrasse 19**
    **D-8501 Schwaig b. Nürnberg(DE)**

(74) Vertreter: **Hansen, Bernd, Dr.rer.nat. et al,**
    **Hoffmann . Eitle & Partner Patentanwälte**
    **Arabellastrasse 4**
    **D-8000 München 81(DE)**

(54) **Elektrode für die Schmelzflusselektrolyse.**

(57) Eine Elektrode für die Schmelzflußelektrolyse aus einem oberen Absc-nitt (5) aus Metall und einem ersetzbaren unteren Abschnitt (6) aus sich verbrauchendem bzw. langsam sich verbrauchendem Material, dai durch einen Schraubnippel (1) oder dergleichen miteinander verbunden sind, wobei der obere Abschnitt eine Kühleinrichtung mit einem Vorlaufkanal (2) und einem Rücklaufkanal (3) aufweisen kann und der obere Abschnitt (5) zumindest teilweise, vorzugsweise in dessen unterem Berich, einen Schutzüberzug aufweist, wobei der Schutzüberzug einen lösbar aufgesetzten Mantel (4) aus mechanisch resistentem Material darstellt, das elektrisch leitfähig ist. Der Mantel kann in Einzelsegmente unterteilt sein, wobei die Ausbildung von aufgeschraubten Einheiten mit innenliegenden Ausnehmungen zur Aufnahme elastischen, elektrisch leitfähigen Materials besonders günstige Eigenschaften zeigt.

./...

Croydon Printing Company Ltd

FIG.1

Elektrode für die Schmelzflußelektrolyse

---

Die Erfindung betrifft eine Elektrode für die Schmelzflußelektrolyse aus einem oberen Abschnitt aus Metall und einem ersetzbaren unteren Abschnitt aus sich verbrauchendem bzw. unverbrauchbarem Material, die durch einen Schraubnippel eine Klemmverbindung oder dergleichen miteinander verbunden sind, wobei der obere Abschnitt gegebenenfalls eine Kühleinrichtung und der obere Abschnitt zumindest in dessen unterem Bereich einen Schutzüberzug aufweist.

Unter Schmelzflußelektrolysen sollen insbesondere Verfahren zur Gewinnung von Metallen, wie Al, Mg, Na, Li etc., verstanden werden, die sich aufgrund des negativen Potentials nicht aus wäßrigen Lösungen abscheiden lassen.

Der Einsatz von Kombinationselektroden, die aus einem Elektrodenhalter mit angefügtem Aktivteil bestehen, für den Betrieb bei der Schmelzflußelektrolyse ist bekannt. Der metallische Elektrodenhalter dient dabei nicht nur zur mechanischen Befestigung des Aktivteils,

sondern auch als Stromzuführung. Weiterhin sind aus der DE-OS 24 25 136 bereits unverbrauchbare Anoden für die Schmelzflußelektrolyse bekannt, bei denen durch lokale Kühlung eine Schlackenschicht auf der ungeschützten Stromzuführung und der ungeschützten Anode gebildet wird oder die ungekühlte Anodenanordnung durch ein gegen den Elektrolyten beständiges, elektrisch isolierendes Material abgeschirmt wird.

Diese Konstruktionen haben, ebenso wie konstruktive Lösungen auf dem Gebiet der Elektroden für die Elektrostahlerzeugung, den Nachteil, daß sie die Schlacke zu stark an der Oxidkeramik oder refräkteren Nitriden anhaftet und sich übermäßige Krustenbildungen einstellen, die die Handhabung der Anoden unmöglich machen und bei jedem notwendigen Austausch der Aktivteile zu schweren Beschädigungen des Schutzüberzugs und der Metallschäfte führen.

Dementsprechend liegt dieser Erfindung die Aufgabe zugrunde, Elektrodenkonstruktionen langer Lebendauer mit geringem Strom- und Spannungsabfall in der Zuführung zu schaffen, die möglichst wenig störungsanfällig, aber auch herstellungs- und reparaturfreundlich sind. Auch soll die Elektrodenkonstruktion gewisse Notlaufeigenschaften besitzen, wenn der Aktivteil der Elektrode zerstört, aufgebraucht oder passiviert wird.

Diese Aufgabe wird durch eine Elektrode der eingangs genannten Art gelöst, die dadurch gekennzeichnet ist, daß der Schutzüberzug einen lösbar aufgesetzten Mantel 4 aus mechanisch und chemisch resistentem Material darstellt, das elektrisch leitfähig ist.

Es hat sich insbesondere gezeigt, daß ein ausreichender sowohl mechanischer als auch thermischer Schutz des oberen Abschnitts aus relativ niedrig schmelzendem, hochleitfähigen Metall am günstigsten durch die Wahl eines lösbar aufgesetzten Mantels erreicht wird, der mechanisch widerstandsfähig, korrosionsbeständig und elektrisch leitfähig ist. Die bisher überwiegend eingeschlagenen Wege des Schutzes des empfindlichen Metallschaftes von Kombinationselektroden, nämlich die direkte Auflage isolierender, keramischer Schichten auf dem Übergangsbereich des wassergekühlten Metallschaftes zum Aktivteil aus Graphit oder leitfähiger Oxidkeramik und dergleichen können den während des Betriebes der Elektroden auftretenden besonderen Beanspruchungen, insbesondere den thermischen Wechselbeanspruchungen, den Hochtemperaturbelastungen und insbesondere Thermoschock bei gleichzeitiger mechanischer und thermischer Robustheit nicht entsprechen. Durch die Wahl elektrisch gut leitfähiger, mechanisch robuster Materialien, die lösbar aufgesetzt werden, ergibt sich hier eine spürbare Verbesserung.

Vorteilhafte Ausbildungen der erfindungsgemäßen Elektrode ergeben sich aus den Unteransprüchen.

Erfindungsgemäß ist es möglich, den Mantel etwa in dem Bereich des elektrischen Potentials der Elektrode zu halten. Dies kann beispielsweise durch direkte Auflage des Mantels auf dem oberen Abschnitt aus Metall, nachstehend auch als Metallschaft bezeichnet, oder durch elektrisch leitende Verbindung mit letzterem erfolgen. Soweit der Mantel in die Zelle eingeführt ist, wird der Mantel zweckmäßig aus einem Material mit ausreichend hohem Schmelzpunkt und Beständigkeit gegenüber dem Elektrolysemedium bzw. den hierbei entwickelten Stoffe gebildet. Hierbei können zweckmäßig solche Materialien gewählt werden, die gute elektrische Leitfähigkeit aufweisen. Es ist besonders bevorzugt, wenn der spezifische, elektrische Widerstand kleiner als 100 $\Omega\,mm^2/m$ ist. Die Elektrode besitzt somit an ihrem oberen Abschnitt eine erste, außenliegende, mechanisch resistente, temperaturbeständige Außenhülle, die lösbar aufgesetzt ist. Diese fängt die mechanischen, thermischen und korrosiven Belastungen, die bei der Schmelzflußelektrolyse auftreten können auf und gewährleistet hierdurch das Andauern des Eletrodenvorganges über den innenliegenden inneren Kern, der an die Stromzuführung angeschlossen ist.

In alternativer Weise ist es aber auch möglich, den Mantel zu dem oberen Abschnitt elektrisch isolierend zu halten bzw. aufzusetzen. In einem solchen Fall kann es zweckmäßig sein, den gegenüber dem oberen Abschnitt elektrisch isolierend gehaltenen Mantel auf Erdpotential zu halten. In diesem Fall können auch widerstandsfähige Mantelmaterialien mit geringerer elektrischer Leitfähigkeit Verwendung finden.

Unabhängig von der Art der isolierenden oder elektrisch leitenden Verbindung von Mantel mit dem Metallschaft, kann diese durch Zwischenstücke oder auch Abstandshalter erfolgen. Diese werden bevorzugt aus temperaturbeständigem Material gewählt. Dabei kann es auch günstig sein, wenn dieses Material thermisch schlecht leitfähig ist. Der Mantel kann aber auch durch eine homogene oder rasterförmig aufgetragene Zwischenschicht auf dem Metallschaft getragen sein, die keine unlösbare oder schlecht lösbare Verbindung

- 5 -

mit dem Mantel ergibt. Die Zwischenschicht kann, je nachdem, ob der Mantel auf Elektrodenpotential oder auf Erdpontential gehalten werden soll, elektrisch leitfähig, was besonders bevorzugt ist, oder eletrisch isolierend sein. Als besonders günstig hat sich die Wahl elastischer bzw. federnder Zwischenschichten erwiesen, die den Vibrationen und anderen mechanischen Beanspruchungen der Elektrode besonders gut Rechnung zu tragen vermögen.

Im übrigen ist es auch möglich, den Mantel in Ausstülpungen oder Ausnehmungen des oberen Abschnittes einzuhängen. Andererseits haben sich konstruktive Lösungen, bei denen der innere Kern mit dem äußeren Mantel durch ein oder mehrere Gewinde oder durch die Ausbildung als Einpaßstück verbunden ist, besonders bewährt, zumal im Falle auftretender Reparaturen auch eine leichte Trennung möglich ist. In zweckmäßiger Weise kann bei der Ausbildung von Mantel und Metallschaft als Paßstücke ein Teilgewinde vorgesehen sein.

Der Mantel kann auch ein Kühlsystem aufweisen. So können Kühlnuten zur Gaskühlung, aber auch ein Kühlmittelkreislauf vorgesehen sein. Im letzteren Fall kann der Mantel beispielsweise ein doppelwandiges Rohr darstellen, in dem Gas, z. B. Luft, Stickstoff oder Argon, bzw. Flüssigkeit zu- und abgeführt wird. Dies kann offensichtlich auf verschiedenartige Weise geschehen., beispielsweise durch axiale oder wendelförmige Führung von Kühlkanälen etc.. Im Einzelfall kann der Mantel ein den oberen Abschnitt umgebendes Rohr aus hochschmelzendem, hochwarmfesten Stahl darstellen, der von Kühlkanälen durchzogen ist, wobei das Stahlrohr auf dem Metallschaft, der vorzugsweise aus Kupfer oder anderen hochleitfähigem Metall bzw. Metallegierung besteht, gelagert ist.

Es kann günstig sein, den Mantel um die Stirnfläche des oberen Abschnittes zumindest teilweise herumzuziehen, um letzteren vor dem direkten Angriff des Elektrolyten bzw. erzeugter Stoffe zu schützen. Hierbei kann der um die Stirnfläche herumgezogene Mantelabschnitt den verbrauchbaren unteren Abschnitt, der im allgemeinen aus Kohlenstoffmaterial, wie Graphit oder elektrisch leitfähigem keramischen Material, wie Zinnoxid, leitend berühren oder nur einen geringen Abstand hiervon haben. Hierdurch kann erreicht werden, daß bei einem Ausfall des Aktivteils der Stromfluß durch den äußeren Mantel, nicht aber durch die Stirnfläche des oberen Abschnittes geht. Gegebenenfalls kann der Mantel zum zusätzlichen Schutz der Stirnfläche des oberen Abschnittes zu dem "Aktivabschnitt" der Elektrode einen isolierenden Einsatz besitzen, beispielsweise einen Keramikring, etc..

Zwischen dem Mantel und dem Metall des oberen Abschnittes kann mit Vorteil auch eine Zwischenschicht vorgesehen sein. Diese Zwischenschicht kann in Abhängigkeit davon, ob der außenliegende Mantel auf dem Potential der Elektrode oder auf Erdpotential gehalten werden soll, elektrisch leitfähig oder elektrisch isolierend sein. Durch die Zwischenschicht kann entweder alternativ oder zusätzlich zu den sonst vorgesehenen Halterungen oder Zwischenstücken eine noch bessere Abstützung des Mantels auf dem Metallschaft erfolgen. Die Zwischenschicht kann den gesamten Raum zwischen Mantel und Metall des oberen Abschnittes bedecken, alternativ aber auch nur in Teilbereichen vorhanden sein. Dabei ist nicht nur an eine Aufbringung der Zwischenschicht in Rasterform, sondern mit besonderem Vorteil daran gedacht,
den Mantel an Bereichen besonderer Beanspruchung gegebenenfalls kontinuierlich abzustützen. Eine besonders
günstige Ausführungsform der Erfindung ist auf die
Vorsehung von Materialen gerichtet, die elastische
bzw. federnde Eigenschaften besitzen. Als solche
Materialien können z. B. Kohlenstoffasern, Kohlenstoffkordeln, Kohlenstoffpulver, Graphitfolien, gekörnter Graphit, Kupferlitze oder eine Kombination
hiervon vorgesehen sein, wobei diese Materialien eine
elektrisch leitende Zwischenschicht ergeben.

Wenn es gewünscht ist, die Zwischenschicht elektrisch
isolierend auszulegen, können beispielsweise nichtleitende keramische Fasern, Glasfasern, etc. zum Einsatz
kommen. Als weiteres günstiges Material für die
Zwischenschicht können Kunstharze dienen, die für
einen elastischen Sitz des Mantels auf dem Metallschaft der Kombinationselektrode sorgen können. Verwendbare Kunstharze sind z. B. solche, wie sie beispielsweise für die Herstellung der Isolierteile
von Hochspannungsschaltern oder auch als Basis für
gedruckte Schaltungen etc. bekannt sind. Natürlich
ist es auch möglcih, Kombinationen solcher Materialien
zu verwenden, wobei sich dies nach der Art des Mantels,
der Beanspruchung der Elektrode und deren Auslegung
richten kann. So ist beispielsweise der Einsatz von
hochtemperaturfestem, leitenden Filz bzw. derartigen
Fasern, Vliesen oder Geweben, insbesondere bei solchen
Anwendungszwecken bevorzugt, wo die Elektrode im Betrieb mechanischen Erschütterungen oder Vibrationen
ausgesetzt ist, so daß es darauf ankommt, den außenliegenden Mantel elastisch und elektrisch leitend abzufangen, was zur zusätzlichen Stabilisierung der Elektrode beiträgt.

Nach einer besonders bevorzugten Ausführungsform der Erfindung ist der Mantel aus einer Mehrzahl von Elementen, insbesondere Segmenten, gebildet. Diese können eine Serie von Rohrabschnitten, Halbschalen oder dergleichen umfassen, die zumindest den unteren Bereich des oberen Abschnittes der Elektrode bis in den Bereich des Schraubnippels, gegebenenfalls darüber hinaus, umgeben. Insbesondere kann der Mantel den sogenannten "Dreiphasenbereich" umgeben, d. h. den Bereich der dem Elektrolysemedium im Bereich des Übergangs zur Umgebungsatmosphäre ausgesetzt ist. Der Einsatz von im wesentlichen rohrförmigen Abschnitten ist besonders bevorzugt. Dabei kann es günstig sein, wenn die Einzelsegmente aufeinander aufsitzen , so daß im Falle des Bruches oder Ausfallen eines unterliegenden Segmentes die oberen in die Zone besonderer Beanspruchung nachrutschen können. In einem solchen Fall ist es zweckmäßig, lediglich das unterste Segment des Mantels auf dem Metallschaft oder auf Halterungen bzw. Zwischenstücken zu lagern, so daß die darüberliegenden Segmente frei beweglich sind.

Bei einer anderen Ausführungsform der Elektrode ist es besonders bevorzugt, daß der Mantel aus Segmenten besteht, wobei jedes einzelne Segment über ein Gewinde mit dem Metall des oberen Abschnittes verbunden sein kann. Hierdurch kann eine besonders feste, leicht lösbare aber dennoch stabile Auflage der Segmente auf dem Metall des oberen Abschnittes erreicht werden. Durch diese Anordnung ist es auch möglich, die Segmente bzw. Rohrabschnitte des Mantels sukzessive von unten nach oben durch eine entsprechende Schraubbewegung zu verschieben. Dies hat den Zweck, die unteren, einem stärkeren Verschleiß unterliegenden Segmente, die zwar schon etwas angegriffen sind, zum Schutz des oberen Teils des Metallschafts aber noch geeignet sind, nach oben zu bewegen und von untern her neue oder früher am oberen Teil des Metallschafts angebrachte Segmente bzw. Rohrabschnitte an dem unteren Teil des Metallschafts anzuordnen. Hierfür muß das Gewinde lediglich eine geeignete Ausbildung haben. Es wird durch diese Maßnahme der Vorteil erreicht, daß die Rohrabschnitte bzw. Segmente des Mantels möglichst lange und materialsparend eingesetzt werden können.

Es ist günstig, die Stirnflächen der Segmente zu profilieren oder in anderer Weise Rechnung zu tragen, daß die Segmente den Kern gut abdecken. Dies kann dadurch erreicht werden, daß die Stirnflächen der Segmente ineinander eingreifen bzw. diese profiliert sind. Durch die Profilierung soll insbesondere eine Labyrinthdichtung des Mantels erfolgen.

Nach einer bevorzugten Ausführungsform der Erfindung weist die Profilierung des einen Segmentes zumindest eine ringförmige Erhebung auf, die in eine Ringnut der Profilierung des benachbarten Segmentes eingreift. Dabei hat es sich als besonders geeignet erwiesen, wenn die ringförmige Erhebung des einen Segmentes als auch die ringförmige Nut des benachbarten Segmentes im Querschnitt etwa trapezförmig ausgestaltet sind.

Mit Vorteil sind die Einzelsegmente derart ausgebildet, daß an ihrer Innenfläche Ausnehmungen entstehen. Diese sind insbesondere ringförmig. In die ringförmigen Ausnehmungen können die Materialien der elektrisch leitenden bzw. der elektrisch isolierenden Zwischenschicht

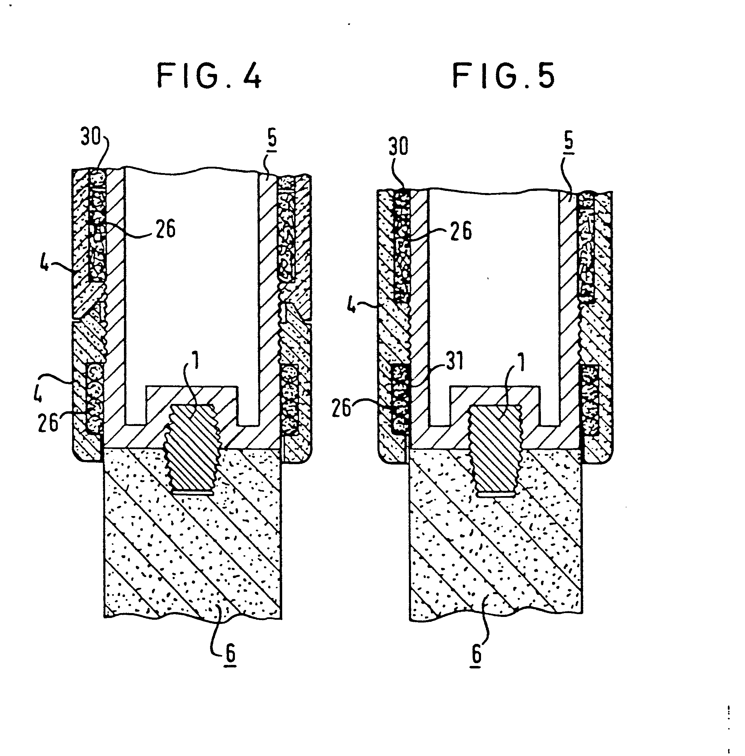

eingebracht werden. In diese Ausnehmungen werden mit Vorteil Kohlenstoffasern bzw. -filze, -kordeln gegebenenfalls in Kombination mit Graphitfolien eingebracht, wodurch die über ein Gewinde mit dem Kern verbundenen Einzelsegmente besonders elastisch gelagert werden. Bei derartigen und anderen Ausführungsformen ist es insbesondere im Rahmen der Erfindung günstig, wenn die Segmente aus Graphit gebildet sind. Derartige Ausführungsformen des erfindungsgemäß vorgesehenen Mantels sind in den Fig. 4 bis 6 dargestellt, auf die bereits hier zu diesem Zweck ausdrücklich verwiesen wird.

Für manche Anwendungszwecke ist es besonders günstig, wenn das den Mantel bzw. dessen Segment bildende Kohlenstoffmaterial imprägniert ist.

Es ist im übrigen auch möglich, daß der Mantel bzw. dessen Segmente in hochtemperaturbeständiges Coating aufweisen.

Erfindungsgemäß ist besonders eine Elektrode bevorzugt, bei der im unteren Bereich des Metallschaftes, an den sich das Aktivteil anschließt, der Mantel in Einzelsegmente aufgeteilt ist, die mit Vorzug aus Graphit bestehen und wobei gegebenenfalls zwischen den Graphitsegmenten und dem Metallschaft durch die Einfügung von leitendem Gewebe oder Filz eine Abpufferung bzw. durch die Einbringung von Dichtungsmaterialien eine Gasdichtigkeit oder Flüssigkeitsdichtigkeit erfolgt ist. An die Segmente kann sich in Richtung des oberen Teils des Metallschaftes eine Feuerfestmasse, die beispielsweise durch Aufspritzen aufgebracht ist, anschließen. Eine zusätzliche Haftung der Feuerfestmasse kann sich durch die Einbringung von Halterungen, z. B. ange-

schweißten hexagonalen Gitterstücken, etc., ergeben.
Hierbei wird im Regelfall darauf geachtet, daß die
Halterungen durch die Feuerfestschicht mit abgedeckt
sind.

Durch die erfindungsgemäße Ausgestaltung des Schutzüberzugs wird eine Reihe von Vorteilen erzielt. Insbesondere wird ein besonders wirksamer Schutz des Übergangsbereiches des (wasser) gekühlten Metallschaftes
zu dem Aktivteil, z. B. aus Graphit, erzielt. Die erfindungsgemäße Ausbildung des Mantels als lösbares
Formteil, das elektrisch leitfähig ist und segmentiert
sein kann, trägt der thermischen Wechselbeanspruchung
und der mechanischen Belastung, insbesondere aber auch
der Vibration, besonders gut Rechnung. Durch die Wahl
elektrisch leitfähiger Materialien mit guter mechanischer Stabilität und insbesondere deren konstruktive
Ausbildung und Befestigung am Metallschaft ergibt sich
eine hohe Betriebssicherheit und Lebendauer der
Kombinationselektrode. Durch die separate Ausbildung
eines lösbar aufgesetzten Mantels, insbesondere in
formschlüssiger Segmentform, vorteilhaft aus Graphit,
ist es auch möglich, die Befestigungseinrichtungen an
dem Metallschaft in Zonen geringerer Beanspruchung zu
legen und dadurch einem Bruch des Mantelmaterials,
z. B. Graphits, in diesem Breich bestmöglich vorzubeugen.

Einige Ausführungsformen der Erfindung, die besonders
bevorzugt sind, werden nachstehend in den Figuren
veranschaulicht. Es zeigen:

Fig. 1      einen Längsschnitt durch einen erfindungs-
            gemäßen Elektrodentyp,

BAD ORIGINAL

Fig. 2     einen Längsschnitt durch eine andere Ausführungsform einer erfindungsgemäßen Elektrode,

Fig. 3     einen Längsschnitt im Übergangsbereich einer
           Elektrode,

Fig. 4-6   schematische Darstellungen der segmentierten
           Ausbildung des Mantels in einem Teillängsschnitt.

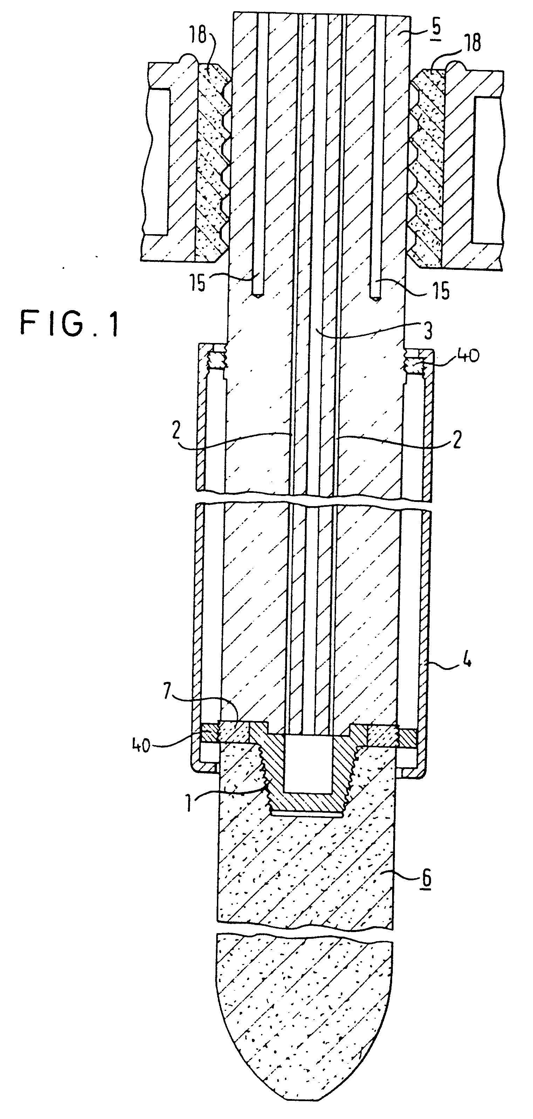

Bei der Elektrode gemäß Fig. 1 wird das Kühlmedium,
z. B. Wasser oder Luft, durch den Vorlaufkanal 2 ein-
und durch den Rücklaufkanal 3 zurückgeführt. Dabei
tritt das Kühldemium auch in eine Kammer innerhalb
des Schraubnippels 1 ein. Der obere Abschnitt 5, im
Regelfall aus Kupfer oder einem anderen hochleitfähigen
Metall, ist durch einen ringförmig ausgebildeten Mantel 4 umgeben, der den unteren Bereich des Metallschaftes in einem Abstand umgibt. An dem Metallschaft ist er über eine Gewindescheibe 40 angeschraubt.
Im unteren Bereich des Metallschaftes ist der Mantel 4
über ein Zwischenstück 7 auf Abstand gehalten, an das
sich eine weitere Gewindescheibe 40 anschließt.

Im oberen Bereich des Metallschaftes sind Backen 18
der Stromzuführung dargestellt, während in dem Metallschaft eingezogene Kühlbohrungen 15 vorgesehen sind.

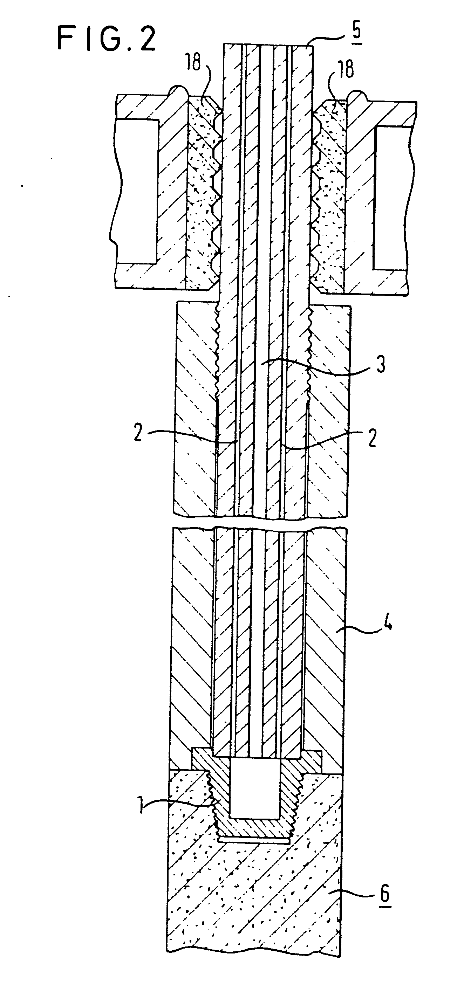

In Fig. 2 ist der Mantel als ein unter der Stromzuführung 18 beginnendes Einpaßstück dargestellt, der in
seinem oberen Bereich zusätzlich mit einem Gewinde
mit dem innenliegenden Metallschaft, der das Kühlsystem
2, 3 trägt, verschraubt ist. Während für den innenliegenden, stromzuführenden Schaft ein hochleitfähiges
Metall, z. B. Kupfer, Verwendung findet, ist es möglich, den schützenden Außenmantel aus einem mechanisch sehr robusten Material mit hohem Schmelzpunkt und guter Warmfestigkeit auszubilden. Die elektrische Leitfähigkeit des Außenmantels kann geringer als die des innenliegenden Metallschaftes sein, da dessen Leitfähigkeit lediglich zur Verleihung von Notlaufeigenschaften dienen muß. Erfindungsgemäß ist es möglich, in die Ausnehmung zwischen innenliegendem Metallschaft und außenliegendem Mantel ein pufferndes Material, wie Filz, Vliese aus keramischer Faser oder Kohlenstoff, bzw. Graphitfolie einzubringen, was aber in Fig. 2 nicht gezeigt ist.

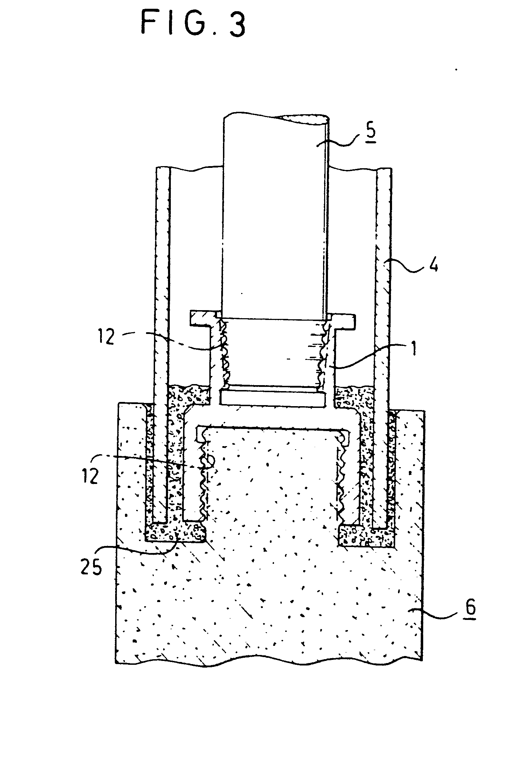

In Fig. 3 ist ein Teilausschnitt im Bereich der Nippelverbindung von Metallschaft 5 mit Aktivteil 6 gezeigt, wobei die jeweiligen Gewinde mit einer die Leitfähigkeit erhöhenden Beschichtung 12 versehen sind. Der elektrisch leitfähige Mantel 4 ist wiederum als Rohr ausgebildet, das neben einer nicht gezeigten Befestigung am Schaft 5 auch zusätzlich in einer Ausnehmung des Aktivteiles 6 abgestützt ist. In der Ausnehmung ist eine hochtemperaturbeständige Masse 25 eingebracht, die - nach nach Auslegung der Elektrode - elektrisch leitfähig oder isolierend sein kann.

In Fig. 4 ist die besonders bevorzugte Ausbildung von Einzelsegmenten des Mantels 4 gezeigt. Die Einzelsegmente sind über ein Gewinde mit der Außenwand des Metallschaftes 5 verschraubt. Die Segmente sind an den Stirnflächen trapezförmig ausgebildet und ergeben dadurch eine Labyrinthdichtung. In Ausnehmungen auf der Innenfläche der Segmente sind Kohlenstoffkordeln und auch Kohlenstoffilze 26 eingebracht. Die Ausbildung des Mantels 4 bzw. der Einzelsegmente kann unterschiedlich sein.

In Fig. 5 ist ein Segment gezeigt, das über ein mittig angebrachtes Gewinde auf den Metallschaft 5 aufgeschraubt ist. In Ausnehmungen an der Innenfläche der Segmente sind elastische bzw. federnde Materialien, z. B. Glasfasern 26 bzw. Gummiringe 30, eingezogen. Auch kann zusätzlich eine Graphitfolie 31 vorgesehen sein.

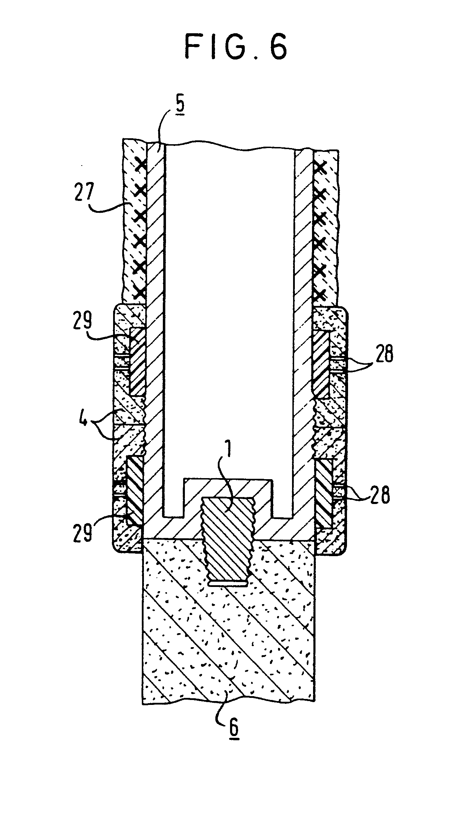

In Fig. 6 sind wiederum etwas anders ausgebildete Profile gezeigt, in deren Innenräumen, bzw. über Bohrungen 28, eingespritzte Kunstharzmasse eingeführt und in situ kondensiert sein kann. Im oberen Bereich des Metallschaftes ist eine feuerfeste Masse auf Hexagittern 27 aufgespritzt.

Als mechanisch resistentes Material für den Mantel, das elektrisch leitfähig ist, können insbesondere solche mit hohem Schmelzpunkt und hoher Warmfestigkeit, aber auch Temperaturwechselbeständigkeit Verwendung finden. Die Materialien können im Einzelfall unter Stahl hoher Warmfestigkeit, Metallen, z. B. Aluminium und insbesondere deren Legierungen ausgewählt werden. Bei manchen Anwendungen können auch Carbide, Nitride bzw. Oxide solcher Metalle geeignet sein.

Als "mechanisch resistentes" Material im Sinne der Erfindung kann aber auch Kohlenstoffmaterial und insbesondere Graphit dienen, insbesondere wenn dieser imprägniert ist und/oder durch die beschriebene spezielle konstruktive Ausgestaltung in Einzelsegmenten und vorteilhaft durch eine elastische Zwischenschicht, aber auch gegebenenfalls durch die Dimensionierung auf eine mechanische Beanspruchung hin besonders konditioniert ist.

Alternative Lösungen sind Materialien, wie Siliziumcarbid, Siliziumnitrid, Tongraphit.Das derzeit im Rahmen der Erfindung bevorzugte Mantelmaterial stellt bevorzugt Graphit und andere Kohlenstoffmaterialien dar.

- 16 -

Patentansprüche:

1. Elektrode für die Schmelzflußelektrolyse aus einem oberen Abschnitt (5) aus Metall und einem ersetzbaren unteren Abschnitt (6) aus sich verbrauchendem bzw. unverbrauchbarem Material, die durch einen Schraubnippel (1) eine Klemmverbindung oder dergleichen miteinander verbunden sind, wobei der obere Abschnitt (5) gegebenenfalls eine Kühleinrichtung und der obere Abschnitt (5) zumindest in dessen unterem Bereich einen Schutzüberzug aufweist, dadurch g e k e n n z e i c h n e t , daß der Schutzüberzug einen lösbar aufgesetzten Mantel (4) aus mechanisch und chemisch resistentem Material darstellt, das elektrisch leitfähig ist.

2. Elektrode nach Anspruch 1, dadurch g e k e n n - z e i c h n e t , daß der Mantel (4) auf dem elektrischen Potential der Elektrode gehalten ist.

3. Elektrode nach Anspruch 1, dadurch g e k e n n - z e i c h n e t , daß der Mantel (4) zu dem oberen Abschnitt (5) elektrisch isolierend gehalten bzw. aufgesetzt ist.

4. Elektrode nach einem oder mehreren der vorhergehenden Ansprüche, dadurch g e k e n n z e i c h n e t , daß der Mantel (4) ein aus Vorlauf- und Rücklaufkanal bestehendes Kühlungssystem und/oder der obere Abschnitt (5) ein aus Vorlaufkanal (2) und Rücklaufkanal (3) bestehendes Kühlungssystem aufweist.

5. Elektrode nach einem oder mehreren der vorhergehenden Ansprüche, dadurch g e k e n n z e i c h n e t , daß der Mantel (4) in einer Ausnehmung des oberen Abschnitts isolierend eingehängt ist.

6. Elektrode nach einem oder mehreren der vorhergehenden Ansprüche, dadurch g e k e n n z e i c h n e t , daß der Mantel (4) ein Formteil darstellt, das lösbar an dem oberen Abschnitt (5) der Elektrode befestigt ist.

7. Elektrode nach einem oder mehreren der vorhergehenden Ansprüche, dadurch g e k e n n z e i c h n e t , daß der Mantel (4) ein aufgesetztes Rohr darstellt.

8. Elektrode nach einem oder mehreren der vorhergehenden Ansprüche, dadurch g e k e n n z e i c h n e t , daß der Mantel (4) um die untere Stirnfläche des oberen Abschnitts (5) teilweise herumgezogen ist, wobei gegebenenfalls der um die Stirnfläche herumgezogene Mantelabschnitt den unteren Abschnitt (6)
elektrisch leitend berührt oder nur einen geringen
Abstand hiervon hat.

9. Elektrode nach einem oder mehreren der vorhergehenden Ansprüche, dadurch g e k e n n z e i c h n e t ,
daß der Mantel (4) aus mehreren Bauteilen oder Segmenten besteht.

10. Elektrode nach einem oder mehreren der vorhergehenden Ansprüche, insbesondere nach Anspruch 3, dadurch
g e k e n n z e i c h n e t , daß der Mantel (4) im
Bereich des unteren Abschnitts (6) von diesem durch
eine Isoliereinheit abgetrennt ist.

11. Elektrode nach Anspruch 1 oder 2, dadurch g e -
k e n n z e i c h n e t , daß eine Zwischenschicht
(26) vorgesehen ist.

12. Elektrode nach Anspruch 11, dadurch g e k e n n -
z e i c h n e t , daß die Zwischenschicht (26) aus
elastischem Material gebildet ist.

13. Elektrode nach Anspruch 12, dadurch g e k e n n -
z e i c h n e t , daß die Zwischenschicht (26) aus
elektrisch leitfähigem Material gebildet ist.

14. Elektrode nach einem oder mehreren der vorhergehenden Ansprüche, dadurch g e k e n n z e i c h n e t ,
daß der Mantel bzw. die Segmente (4) über ein Gewinde
mit dem oberen Abschnitt (5) verbunden sind.

15. Elektrode nach einem oder mehreren der vorhergehenden Ansprüche, dadurch g e k e n n z e i c h n e t ,

daß der Mantel bzw. dessen Segmente (4) aus einem Übergangsmetall, einer Metallegierung oder Metallverbindung mit hohem Schmelzpunkt und hoher Warmfestigkeit, oder Kohlenstoffmaterialien, die gegebenenfalls imprägniert sind, gebildet sind, wobei die genannten Materialien einen elektrischen Widerstand von weniger als 100 $\Omega$ mm²/m aufweisen.

16. Elektrode nach einem oder mehreren der vorhergehenden Ansprüche, dadurch g e k e n n z e i c h n e t , daß eine Profilierung des einen Segmentes (4) zumindest eine ringförmige Erhebung aufweist, die in eine Ringnut der Profilierung des benachbarten Segmentes (4) eingreift.

17. Elektrode nach einem oder mehreren der vorhergehenden Ansprüche, dadurch g e k e n n z e i c h n e t , daß sowohl die ringförmige Erhebung des einen Segmentes (4) als auch die ringförmige Nut des benachbarten Segmentes (4) im Querschnitt etwa trapezförmig ausgestaltet sind.

18. Elektrode nach einem oder mehreren der vorhergehenden Ansprüche, dadurch g e k e n n z e i c h n e t , daß der Mantel bzw. dessen Segmente (4) ein hochtemperaturbeständiges Coating aufweisen.

19. Elektrode nach einem oder mehreren der vorhergehenden Ansprüche, dadurch g e k e n n z e i c h n e t , daß zwischen den Segmenten (4) und dem Metall des oberen Abschnittes (5) Graphit, Kohlenstoffkordel, Graphitfolie, Kunstharz oder eine Kombination hiervon eingebracht ist.

20. Elektrode nach einem oder mehreren der vorhergehenden Ansprüche, dadurch g e k e n n z e i c h n e t , daß der Schutzüberzug aus aufgespritzter Feuerfestmasse (30) im oberen Bereich des oberen Abschnittes (5) und hieran anschließend aus Segmenten (4) aus Graphit gebildet ist.

21. Elektrode nach einem oder mehreren der vorhergehenden Ansprüche, dadurch g e k e n n z e i c h n e t , daß der Mantel (4) zumindest in dem Bereich, in dem er mit dem Elektrolyten und den entstehenden Produkten in Berührung kommen kann, gas- und/oder flüssigkeitsdicht aufgesetzt ist.

FIG.1

FIG.2

FIG. 3

FIG. 4

FIG. 5

30    5

26

4

4

26

1

6

30    5

26

4

31

26

1

6

FIG. 6